Europäisches Patentamt

European Patent Office

Office européen des brevets

(11) Numéro de publication: **0 094 437**
**A1**

## (12) DEMANDE DE BREVET EUROPEEN

(21) Numéro de dépôt: **82103870.0**

(22) Date de dépôt: **05.05.82**

(51) Int. Cl.³: **B 60 J 7/00**
**B 60 H 1/26**

(43) Date de publication de la demande:
**23.11.83 Bulletin 83/47**

(84) Etats contractants désignés:
**AT BE CH DE FR GB IT LI LU NL SE**

(71) Demandeur: **IDEX (JERSEY) LTD.**
**Boîte Postale 317**
**St-Helier Jersey Iles Anglo-Normandes(GB)**

(72) Inventeur: **Frampton, Jeffery**
**Champ de la Tour**
**CH-1268 Begnins(CH)**

(74) Mandataire: **Clifford, Frederick Alan et al,**
**MARKS & CLERK 57/60 Lincoln's Inn Fields**
**London WC2A 3LS(GB)**

(54) **Panneau ouvrant, notamment toit ouvrant pour véhicule automobile, entièrement réglable.**

(57) Le panneau ouvrant peut être fixé à la surface du toit du véhicule après construction de ce dernier.

Le panneau est fixé à la surface du toit du véhicule par l'intermédiaire des charnières (12) et d'une poignée (11).

La surface ouvrante (6) repose sur un joint (4) qui permet de répartir de façon uniforme la pression de la surface ouvrante (6) sur l'ensemble cadre (2) /contre-cadre et surface du toit du véhicule.

Fig:3

EP 0 094 437 A1

Croydon Printing Company Ltd.

# PANNEAU OUVRANT, NOTAMMENT TOIT OUVRANT POUR VEHICULE AUTOMOBILE, ENTIEREMENT REGLABLE

La présente invention a trait à un panneau ouvrant, notamment un toit ouvrant pour véhicule automobile, pouvant être entièrement étanche, réglable à tous points de vue et d'une application facile.

Un des objectifs de l'invention est de réaliser un toit ouvrant dans une voiture en transformant la voiture d'origine, pour laquelle on n'avait pas prévu de toit ouvrant.

Le même panneau ouvrant peut s'appliquer à n'importe quelle surface, métallique par exemple, dans laquelle on doit pratiquer une ouverture absolument étanche au moment de la transformation et pour une longue durée d'utilisation.

Le problème à résoudre est celui d'obtenir à la fois une longue durée d'étanchéité ainsi qu'un réalisation facile et peu coûteuse au moment de la transformation, tout en respectant les normes prescrites en la matière.

On connaît des panneaux ouvrants qui permettent d'obtenir une bonne étanchéité mais dont l'application est difficile et les coûts plutôt élevés.

Le panneau ouvrant selon l'invention est caractérisé en ce qu'il comprend un contre-cadre de fixation, un cadre solidaire du contre-cadre où vient se loger la surface ouvrante par l'intermédiaire d'un joint d'étanchéité répartissant de façon uniforme la pression exercée sur lui et des éléments de fixation, de fermeture et d'ouverture, aptes à libérer entièrement la surface ouvrante, la surface fixe pouvant être revêtue intérieurement.

Pour fixer le panneau ouvrant selon la présente invention, on découpe l'ouverture, par exemple dans la surface du toit d'une voiture, selon la forme désirée.

Un cadre est placé sur le bord de l'ouverture et à l'intérieur de la surface du toit de la voiture, un contre-cadre est placé de façon à permettre une fixation complète entre le cadre, le contre-cadre et la surface du toit de la voiture par l'intermédiaire d'une vis de fixation.

Si la surface du toit de la voiture est revêtue intérieurement par un tissu, il est prévu de fixer ce tissu au cadre ou contre-cadre par l'intermédiaire d'une série de joints de finition.

Une fois installé, le cadre étant fixé au contre-cadre par l'intermédiaire de vis de fixation, on remplit la tête des vis de fixation avec du mastic d'étanchéité.

Le cadre est conçu de façon à accueillir un joint sur toute la longueur de l'ouverture. Le joint peut être rempli de liquide.

Le mastic d'étanchéité est collé en même temps au cadre et au joint. De cette façon, le cadre et le joint restent collés l'un à l'autre par l'intermédiaire du mastic d'étanchéité qui retient les éventuelles infiltrations d'eau.

Le joint peut contenir un liquide, qui est un moyen permettant à la surface de fermeture en position fermée de répartir la pression sur tout le bord de la surface de fermeture d'une façon constante et régulière.

A l'intérieur du joint, le liquide utilisé est de préférence un gel ayant la propriété de colmater les fuites éventuelles qui pourraient se produire pendant la durée d'utilisation.

La surface ouvrante est maintenue contre le toit du véhicule à l'aide d'une ou plusieurs charnières et d'une poignée.

Les charnières sont faites de façon à tenir la surface ouvrante assez rapprochée de la surface du toit du véhicule afin d'exercer une  pression réglable sur le joint d'étanchéité.

Une poignée du côté opposé aux charnières permet de soulever un côté de la surface ouvrante et de pouvoir régler l'ouverture entre les positions complètement fermée et complètement ouverte, tout en ayant la possibilité de la bloquer dans une position intermédiaire quelconque.

L'invention sera mieux comprise à l'aide des dessins annexés à titre d'exemple.

La figure 1 représente une coupe du joint 4 avec un liquide 5 à l'intérieur.

La figure 2 représente une coupe, perpendiculairement au joint, de tout le système installé où on voit la surface du toit du véhicule 1, le cadre 2, la vis de fixation 10, le mastic d'étanchéité 3, le joint 4, le liquide 5, la surface ouvrante 6, le tissu 7 revêtant la surface intérieure du toit du véhicule, le contre-cadre 8, le joint de finition 9.

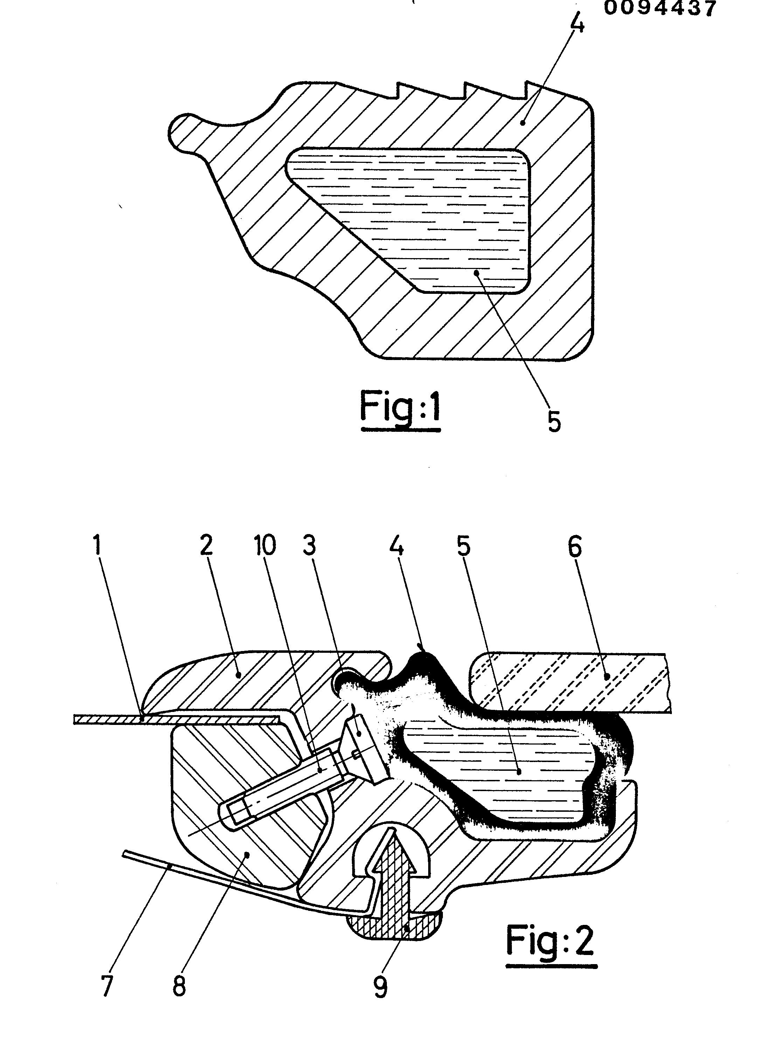

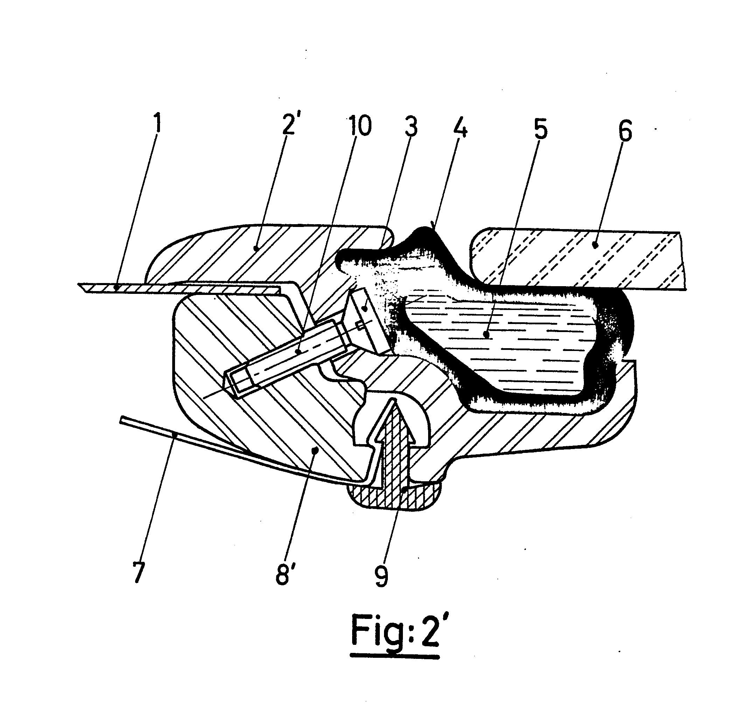

La figure 2' représente la même coupe que la figure 2 mais dans une différente forme d'exécution du cadre 2' et du contre-cadre 8'.

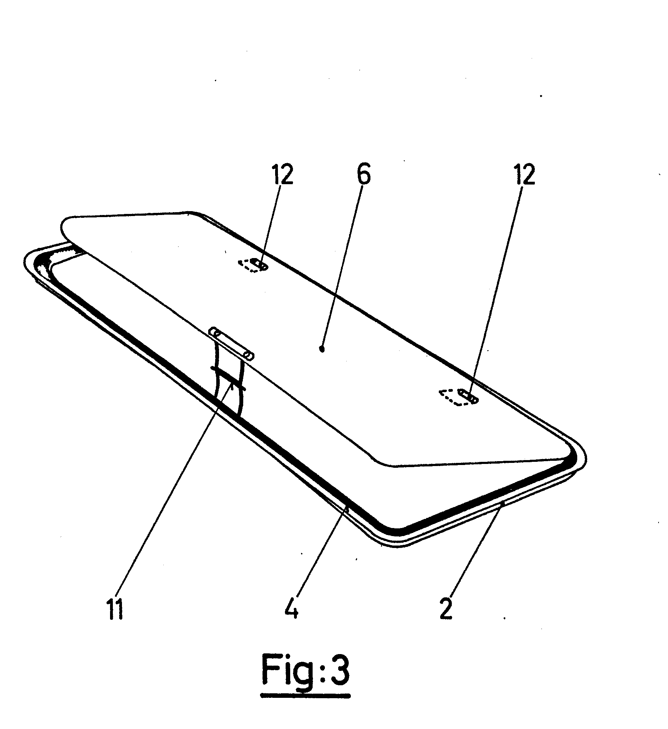

La figure 3 représente un exemple d'application de l'invention à un toit ouvrant de voiture. Le joint 4 est fixé à l'intérieur du cadre 2 et la surface ouvrante 6 représente un toit ouvrant de voiture fixé par des charnières et la poignée d'ouverture 11.

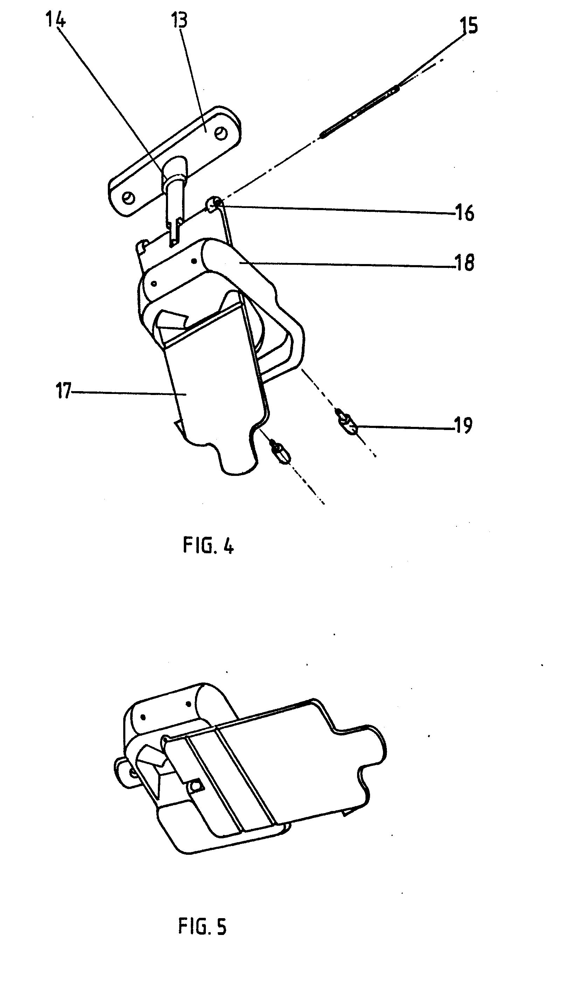

La figure 4 représente les charnières 12 en perspective et montre toutes les pièces composantes du système. La partie mobile 13 de la charnière est fixée à la surface ouvrante. Elle se termine par un pivot vertical 14 auquel est fixée une languette de fixation 17 à l'aide d'un pivot 15 qui s'enfile dans le support 16 du pivot horizontal. La languette 17 s'enfile dans la partie fixe 18 de la charnière et peut être fixée en position intermédiaire à l'aide des butées de support 19.

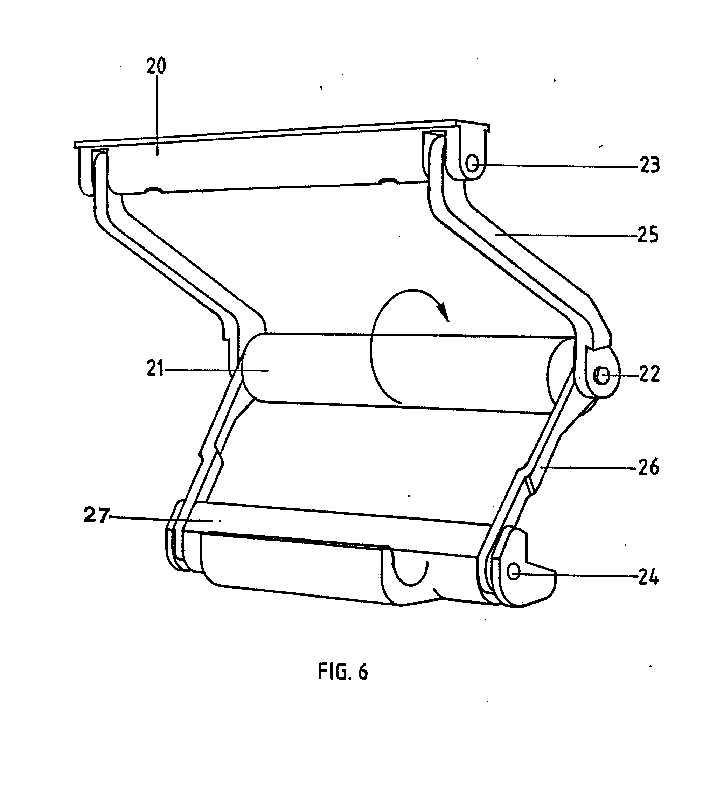

La figure 5 montre la charnière en position complètement fermée.

La figure 6 montre dans le détail la poignée 11 dans laquelle la partie mobile 20 est fixée à la surface ouvrante. La partie mobile 20 est fixée aux bras d'ouverture 25 par l'intermédiaire d'un pivot mobile 23. Sur le pivot 22, axe de la poignée de blocage, sont fixées la poignée de blocage 21, les bras d'ouverture 25 et les bras d'ouverture 26. Le bras d'ouverture 26 se fixe à la partie fixe 27 de la poignée par l'intermédiaire du pivot fixe 24.

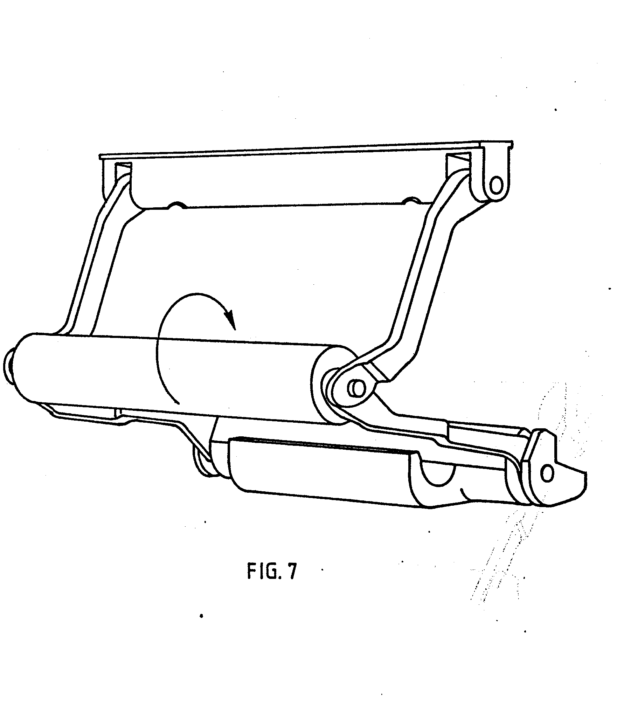

La figure 7 montre la poignée dans une position intermédiaire bloquée à l'aide de la poignée de blocage 21. Le blocage est réalisé en tournant la poignée autour de son axe 22 selon l'indication de la flèche.

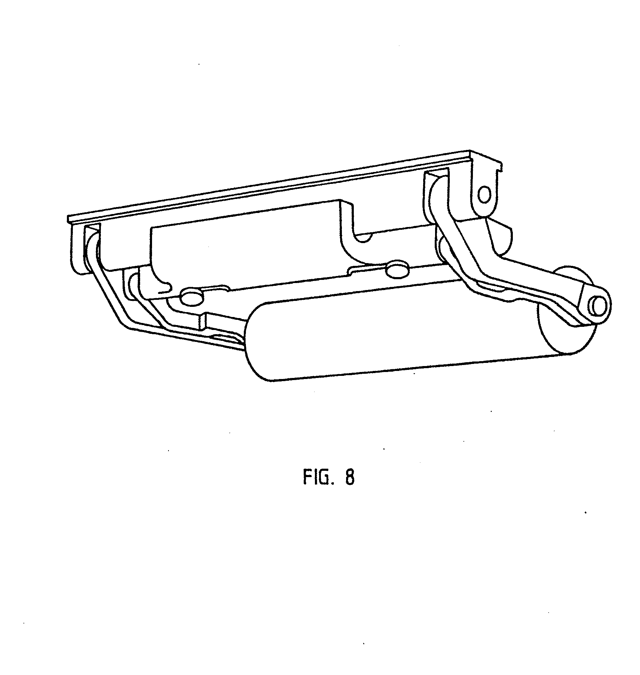

La figure 8 montre la poignée en position complètement fermée.

Les figures 4 à 8 représentent donc les éléments de fixation, de fermeture et d'ouverture.

Le panneau ouvrant selon l'invention est appliqué après avoir coupé la surface du toit du véhicule 1 selon la forme désirée d'ouveture à obtenir. Il faut ensuite fixer le cadre 2 au contre-cadre 8 par l'intermédiaire de la vis de fixation 10.

On a remarqué après plusieurs essais qu'une fixation de la vis 10 du cadre 2 au contre-cadre 8 est avantageuse si l'angle de la vis représente entre 15 et 75° par rapport à l'horizontale, de préférence entre 25 et 35°. Comme, avantageusement, le cadre 2 et le contre-cadre 8 sont en contact l'un de l'autre en point seulement, celui-ci fait office de point de basculement, plaquant encore plus fortement le contre-cadre 8 contre le toit du véhicule 1.

Une fois la vis de fixation bien serrée, on imperméabilise le trou de la vis à l'aide du mastic d'étanchéité 3. A ce moment, on peut fixer le joint d'étanchéité 4 tout autour du cadre 2 à l'aide du mastic d'étanchéité 3.

A l'intérieur du joint d'étanchéité 4, il peut y avoir le liquide 5 qui est doté de la propriété de colmater les trous éventuels pouvant se former dans le joint 4. Pour obtenir ce résultat, le liquide 5 peut être un gel.

Si, sur la surface métallique 1, il y a un revêtement 7, par exemple un tissu, à l'intérieur de la surface du toit du véhicule, le revêtement 7 peut être fixé à l'installation du cadre et du contre-cadre à l'aide du joint de finition 9 qui s'engage dans un logement prévu fixant le tissu 7. En variante non représentée, le joint de finition 9 fait raccord avec le revêtement 7.

Dans une variante de la forme d'exécution, l'accouplement entre le cadre 2' et le contre-cadre 8' forme l'engagement prévu pour le joint de finition 9.

Dans la forme d'exécution qui prévoit le liquide 5 à l'intérieur du joint 4 quand la surface ouvrante 6 se trouve en position fermée, celle-ci appuie sur le joint 4 qui transmet la force au liquide 5. Le liquide est ainsi appelé à répartir la pression tout le long du joint 4 d'une façon régulière.

Dans la figure 3, on montre une application de la présente invention dans laquelle la surface ouvrante 6 représente la partie mobile d'un toit ouvrant pour voiture.

La surface ouvrante 6 pivote autour de deux charnières 12 selon les mouvements exercés sur la poignée 11.

Les charnières 12 sont constituées d'une partie mobile 13 qui est fixée d'un côté à la surface ouvrante 6 et de l'autre côté porte un pivot vertical 14. Le pivot 14 est fixé à une languette 17 à l'aide d'un pivot horizontal 15 et la languette 17 est située à l'intérieur de la partie fixe 18 de la charnière. La languette peut être fixée dans une position intermédiaire à l'aide des butées 19 ou elle peut être fixée en position complètement fermée selon ce qui est montré sur la figure 5.

La poignée est constituée de trois éléments de base, une partie mobile 20 fixée à la surface ouvrante, une partie fixe, inférieure, 27 fixée au cadre 2 et une poignée de blocage 21. Les bras d'ouverture 25 et 26 se situent entre ces trois pièces. Le tout pivote sur trois axes 22,23 et 24.

La poignée peut être bloquée à n'importe quelle position par un mouvement de rotation de la poignée de blocage 21. La rotation de la poignée de blocage 21 déplace en le bloquant un excentrique à l'intérieur de la poignée même.

Dans une deuxième forme d'exécution, la rotation de la poignée de blocage 21 bloque la poignée dans la position désirée par un système à vis de friction. Dans une troisième forme d'exécution, la poignée est du type à écrasement , le relâchement de celle-ci entraînant son blocage.

Dans cette forme d'exécution, on peut prévoir une série de dents à l'intérieur de la poignée où un système de blocage va s'insérer dans une dent et peut être débloqué de façon à permettre une ouverture ou une fermeture du toit à l'aide d'un bouton servant à débloquer le système de blocage et l'engrenage à l'intérieur de la poignée.

Le système de blocage est tenu en place par un ressort et débloqué depuis la poignée par une pression à un endroit prédéterminé.

Un blocage semblable peut être obtenu en remplaçant l'engrenage à l'intérieur de la poignée par un système de friction.

Le système de friction aurait l'avantage de permettre un réglage continu de l'ouverture du toit tandis que le système à engrenage permet des blocages dans certaines positions prédéterminées.

En outre, le système à engrenage est une réalisation mécanique plus simple tandis que le système à friction nécessite une construction mécanique plus compliquée afin de garantir un blocage efficace.

Le panneau ouvrant selon l'invention présente l'avantage d'un encombrement en épaisseur très réduit. Ainsi, un toit ouvrant pour voiture se conforme aisément aux normes de la Communauté Economique Européenne (C.E.E.), soit une saillie de moins de 19 cm sous le toit, à l'intérieur de la voiture; en fait, un toit tel que celui qui est rerpésenté à la figure 2 ou 2' ne fait pas saillie de plus de 16 à 17 cm.

## REVENDICATIONS

1. Panneau ouvrant, notamment toit ouvrant pour véhicule automobile, caractérisé en ce qu'il comprend un contre-cadre (8) de fixation, un cadre (2) fixé au contre-cadre (8) où vient se loger la surface ouvrante (6) par l'intermédiaire d'un joint d'étanchéité (4) répartissant de façon uniforme la pression exercée sur lui, et des éléments (11,12) de fixation, de fermeture et d'ouverture aptes à libérer entièrement la surface ouvrante (6), la surface fixe pouvant être revêtue intérieurement.

2. Panneau ouvrant selon la revendication 1, caractérisé en ce que le cadre (2) est fixé à la surface du véhicule (1) à l'aide d'un contre-cadre (8) situé à l'opposé du cadre (2).

3. Panneau ouvrant selon les revendications 1 et 2, caractérisé par le fait que le cadre (2) est fixé au contre-cadre (8) par l'intermédiaire de vis (10).

4. Panneau ouvrant selon les revendications 1,2 et 3, caractérisé en ce que les vis (10) fixant le cadre (2) au contre-cadre (8) font un angle compris entre 15 et 75° par rapport à l'horizontale.

5. Panneau ouvrant selon les revendications 1,2 et 3, caractérisé en ce que les vis (10) fixant le cadre (2) au contre-cadre (8) sont rendues étanches par du mastic (3).

6. Panneau ouvrant selon les revendications 1,2 et 3, caractérisé en ce que l'accouplement entre le cadre (2) et le contre-cadre (8) est rendu étanche à l'aide de mastic (3) disposé entre le cadre (2) et le contre-cadre (8).

7. Panneau ouvrant selon la revendication 1, caractérisé en ce que le revêtement intérieur (7) est fixé à l'ensemble cadre (2)/contre-cadre (8) à l'aide d'au moins un joint de finition (9).

8. Panneau ouvrant selon la revendication 7, caractérisée en ce que le joint de finition (9) fait raccord avec le revêtement intérieur (7).

9. Panneau ouvrant selon la revendication 1, caractérisé en ce que la surface ouvrante (6) est fixée par l'intermédiaire d'une ou plusieurs charnières (12).

10. Panneau ouvrant selon la revendication 1, caractérisé en ce que la surface ouvrante (6) est fixée à l'aide d'une poignée (11).

11. Panneau ouvrant selon la revendication 1, caractérisé en ce que la surface ouvrante (6) est fixée à l'aide, d'un côté, d'une ou plusieurs charnières (12) et de l'autre côté, à l'aide d'une poignée (11).

12. Panneau ouvrant selon les revendications 1 et 8 caractérisé en ce que la charnière (12) est constituée par une partie mobile (13) à laquelle est rattaché un pivot (14) auquel se fixe une languette (17) s'insérant dans une partie fixe (18), l'ensemble permettant deux sortes de blocage différents, un à l'aide de deux butées (19) et l'autre à l'aide d'un blocage de la languette (17) de fixation par rotation.

13. Panneau ouvrant selon les revendications 1,10 et/ou 11, caractérisé par le fait que la poignée (11) est constituée en trois parties, une partie mobile (20) fixée à la surface ouvrante (6), une partie fixée (27) au cadre (2) et une poignée de blocage (21) les trois parties étant reliées par deux séries de bras d'ouverture (25) et (26).

14.  Panneau ouvrant selon la revendication 13, caractérisé en ce que la poignée de blocage (21) permet d'arrêter l'ouverture à n'importe quelle position entre les positions ouverte et fermée, la fixation étant permise par rotation de la poignée de blocage (21).

15.  Panneau ouvrant selon la revendication 14, caractérisé en ce que la rotation de la poignée de blocage (21) bloque le système à l'aide d'un excentrique situé à l'intérieur.

16.  Panneau ouvrant selon la revendication 14, caractérisé en ce que la rotation de la poignée de blocage (21) bloque le système à l'aide d'une vis qui agit sur un anneau à friction à l'intérieur de la poignée de blocage (21).

17.  Panneau ouvrant selon la revendication 13, caractérisé en ce que la poignée de blocage (21) est du type à écrasement, l'écrasement de celle-ci entraînant le blocage et permettant d'arrêter l'ouverture à n'importe quelle position entre les positions ouverte et fermée.

18.  Panneau ouvrant selon la revendication 13, caractérisé en ce que la poignée de blocage (21) comporte à l'intérieur un engrenage permettant de bloquer la poignée dans une position quelconque entre les positions ouverte et fermée, à l'aide d'une saillie, qui s'engage dans un engrenage, tenue en place par un ressort, la saillie pouvant être retirée en appuyant sur un bouton situé sur la poignée.

0094437

Fig:1

Fig:2

2|7

0094437

Fig: 2'

0094437

**Fig:3**

FIG. 4

FIG. 5

FIG. 6

FIG. 7

7/7

0094437

FIG. 8

Office européen
des brevets

**RAPPORT DE RECHERCHE EUROPEENNE**

**0094437**
Numéro de la demande

EP 82 10 3870.0

| Catégorie | Citation du document avec indication, en cas de besoin, des parties pertinentes | Revendica-tion concernée |
|-----------|---------------------------------------------------------------------------------|---------------------------|
| X | US - A - 3 913 971 (H. GREEN)  * fig. 3, 4 * | 1-11 |

**DOCUMENTS CONSIDERES COMME PERTINENTS**

**CLASSEMENT DE LA DEMANDE (Int. Cl. 3)**

B 60 J 7/00

B 60 H 1/26

**DOMAINES TECHNIQUES RECHERCHES (Int. Cl. 3)**

B 60 H 1/00

B 60 J 7/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|----------------------|-----------------------------------|-------------|
| Berlin | 02-12-1982 | BECKER |

OEB Form 1503.1   06.78